# EUROPÄISCHE PATENTSCHRIFT

(11) **EP 3 350 469 B1**
(45) Veröffentlichungstag und Bekanntmachung des Hinweises auf die Patenterteilung: **27.11.2024**
(21) Anmeldenummer: 16729252.3
(22) Anmeldetag: 13.06.2016
(51) Int. Cl.: F16F 9/04, F16G 1/08, F16G 5/08

(54) **DÄMPFUNGSELEMENT**
DAMPER
AMORTISSEUR

(30) Priorität: 17.09.2015 DE 102015217881
(43) Veröffentlichungstag der Anmeldung: 25.07.2018
(73) Patentinhaber: ContiTech Deutschland GmbH, 30175 Hannover (DE)
(72) Erfinder: LEETHAUS, Thorsten, 37632 Eschershausen (DE); ZANDER, Christoph, 22927 Grosshansdorf (DE); LINDENBERG, Mark, 30826 Garbsen (DE); MAHNKEN, Claus-Lueder, 27367 Ahausen (DE)
(74) Vertreter: Continental Corporation
(86) Internationale Anmeldenummer: PCT/EP2016/063468
(87) Internationale Veröffentlichungsnummer: WO 2017/045785

(56) Entgegenhaltungen:
- EP-A1- 2 549 143
- WO-A1-01/75330
- DE-A1- 102009 044 533
- DE-A1- 102011 002 230
- DE-A1- 102012 104 352
- DE-A1- 102012 214 640
- DE-A1- 3 731 526
- DE-U- 1 750 351
- US-A- 4 482 593

## Beschreibung

Die Erfindung betrifft einen Artikel mit einem Grundkörper aus einem polymeren Werkstoff mit elastischen Eigenschaften.

Artikel aus polymeren Werkstoffen, die zur Federung bspw. von Kraftfahrzeugen oder Schienenfahrzeugen eingesetzt werden und / oder der Schwingungsdämpfung dienen, werden unter Verwendung elastomerer Mischungen, auch als Kautschukmischungen bezeichnet, hergestellt. Diese, für die grundlegenden Eigenschaften solcher Artikel üblicherweise verwendeten elastomeren Mischungen sind hinreichend bekannt. Artikel mit herausragenden elastischen Eigenschaften, wie bspw. Metall-Gummi Elemente oder Schwingungsdämpfer, enthalten vorzugsweise vulkanisierte Kautschukmischungen, die überwiegend auf Naturkautschuk (NR) und / oder Polyisoprenkautschuk (IR) basieren. Artikel mit einer sehr guten Witterungs-, Mineralöl- und Wärmebeständigkeit, wie bspw. Luftfederbälge, enthalten vorzugsweise vulkanisierte Kautschukmischungen, die überwiegend auf Chloroprenkautschuk (CR) basieren.

Allerdings zeigen Artikel mit diesen elastomeren Mischungen deutliche Nachteile im Brandverhalten. Im Brandfall entstehen unter anderem dichte Rauchgase. Beim Verbrennungsprozess der genannten elastomeren Mischungen, die überwiegend auf NR und / oder IR basieren, ist die Wärmefreisetzungsrate besonders hoch. Beim Verbrennungsprozess der elastomeren Mischungen, die überwiegend auf CR basieren, ist das entstehende Rauchgas für Mensch und Tier toxisch.

Aufgrund der in den letzten Jahren gestiegenen Anforderungen hinsichtlich des Brandschutzes, welche sich vor allem in der verschärften Brandschutznorm EN 45545 zeigt, ergibt sich ein erhöhter Bedarf an brandschutzoptimierten Polymerartikeln. Diesen Brandschutzanforderungen können sowohl die genannten elastomeren Mischungen, die überwiegend auf NR und / oder IR basieren, vor allem aufgrund der geforderten maximalen Wärmefreisetzungsrate, als auch die flammwidrigen elastomeren Mischungen, die überwiegend auf CR basieren, insbesondere aufgrund der geforderten Rauchgastoxizität, nicht mehr gerecht werden. Somit erfüllen die Artikel, welche diese elastomeren Mischungen enthalten, die verschärften Anforderungen zumeist nicht mehr. Eine übliche Methode das Brandverhalten von Kautschukmischungen zu verbessern, ist das direkte Einmischen von brandhemmenden Substanzen. Allerdings führt diese Maßnahme bei den betroffenen Artikeln in der Regel dazu, dass sich die physikalischen Eigenschaften, insbesondere die Federungs-, Setz- bzw. Schwingungseigenschaften signifikant verschlechtern. Auch Brandschutzbeschichtungen, wie sie in WO 2014/019008 A1 oder auch in EP 2196492 B1 beschrieben werden, sind nur bedingt geeignet, um einen dauerhaften Brandschutz am Artikel zu gewährleisten. Nachteilig für eine gute Beständigkeit gegenüber einer Rißbildung bzw. Ablösung ist die geringe Zerreißfestigkeit. Der hohe Druckverformungsrest besonders bei höheren Temperaturen ist nachteilig für die Federungs-, Setz- bzw. Schwingungseigenschaften der Artikel. Durch den ggf. notwendigen zweiten Vulkanisationsprozess bei der Herstellung der Endprodukte wird besonders der Weiterreißwiderstand von der Mischung des Grundkörpers wegen der üblichen Reversionsneigung gemindert. Auch die Verwendung von einer Brandschutzbeschichtung nur auf der Basis von Blähgraphiten zeigt Nachteile hinsichtlich der Haftung und auch in der Verarbeitung. Blähgraphite selbst expandieren erst bei relativ hohen Temperaturen, so dass auch erst bei relativ hohen Temperaturen die isolierende Wirkung gegeben ist. Es gibt verschiedene Typen von Blähgraphiten, die unterschiedliche Starttemperaturen (Onset-temperature) für den Blähbeginn besitzen. Die Onset Temperatur liegt je nach Type zwischen 140 °C bis 280°C. Die DE 10 2012 104352 A1 offenbart eine Kabelführung, die mit polymeren, beflockten Dämpfungselementen ausgestattet ist.

Die Aufgabe der Erfindung besteht nun darin, einen Artikel bereitzustellen, der sich durch ein optimiertes Brandschutzverhalten auszeichnet, um die verschärften Anforderungen, insbesondere die in EN 45545 beschriebenen, zu erfüllen. Gleichzeitig sollen die notwendigen physikalischen Eigenschaften des Artikels auf einem vergleichbaren Niveau verbleiben und die Komplexität im Herstellprozess nicht nennenswert erhöht werden. Der Artikel soll auch bei niedrigeren Temperaturen, ggf. unterhalb der Starttemperaturen von Blähgraphiten, schon ein ausreichend gutes Brandschutzverhalten aufweisen.

Gelöst wird diese Aufgabe dadurch, dass der Artikel mit einem Grundkörper aus einem polymeren Werkstoff mit elastischen Eigenschaften, eine Artikeloberfläche besitzt, die vollständig oder teilweise mit wenigstens einem Flock versehen ist.

Gemäß DIN 60 0001_2:1990 wird unter einem Flock folgendes verstanden: "Kurze, nicht zum Verspinnen vorgesehene, aber nach anderen Verfahren verarbeitbare Chemiefasern, die gezielt erzeugt werden (nach DIN 60 000)." Die Norm ISO 8159:1987 gibt unter 3.12 zur Definition von Flock folgendes an: "Very short fibres destinated to be stuck to a backing".

Als Flocktextilien werden gemäß DIN 60 000:1969 Flächengebilde verstanden, die dadurch gebildet sind, dass textile Fasern an einem ihrer Enden durch einen Kleber mit einem textilen oder nicht-textilen Träger verbunden sind."

Teilweise bedeutet in diesem Zusammenhang, dass lediglich bestimmte, definierte Bereiche bzw. Abschnitte der Artikeloberfläche des Gesamtartikels mit dem Flock versehen sind.

Der Gesamtartikel ist somit teilweise und / oder vollständig mit wenigstens einem Fasermaterial beflockt.

Durch die Struktur und / oder das Material der Beflockung ergibt sich schon bei Temperaturen, die unterhalb der Starttemperaturen von Blähgraphiten liegen, ein verbesserter Brand- und Flammschutz in Form einer schwereren Entflammbarkeit.

Als Fasermaterial für den Flock können alle der fachkundigen Person bekannten Fasern verwendet werden.

Als Textilfasern für den Flock können bevorzugt Fasern aus synthetischen Polymeren, wie bspw. Polyacrylnitril, Polypropylen, Polyester, Polyamid, Polyurethan, Polyphenylensulfid, Polyoxadiazol, Aramide, wie p-Aramid, m-Aramid oder co-poly para Aramid, Polyimid, Polyetherimid, Polyetheretherketon, Polyethylen-2,6-naphthalat, Polyphenylen, Polyphenylenoxid, Polyphenylensulfid, Polyphenylenether, Polybenzoxazole, Polyvenylalkohol oder auch Fasern aus natürlichen Polymeren, wie bspw. Regeneratfasern auf Cellulosebasis, wie Viskose, Lyocell oder Gummi, eingesetzt werden.

Weiterhin können als Textilfasern bevorzugt Naturfasern verwendet werden. Hierbei kann es sich um mineralische Naturfasern, wie bspw. Steinwolle oder Asbestfasern, oder pflanzliche Naturfasern, wie bspw. aus Baumwolle, Flachs oder Hanf, oder auch um tierische Naturfasern, wie bspw. aus Wolle oder Seide, handeln.

Es ist ebenso denkbar, Textilfasern aus anorganischen Stoffen wie Glas, Keramik, Kohlenstoff (Carbon), Metall oder Gestein, wie bspw. Basalt, zu verwenden.

Die Textilfasern können alleine oder in Kombination, d.h. als Hybridfaser, eingesetzt werden.

Erfindungsgemäß werden für den Flock Fasern bzw. Textilfasern verwendet, die von sich aus schon einen ausreichenden Brandschutz bieten oder von sich aus eine ausreichende Flammwidrigkeit aufweisen, wie bspw. Polyoxadiazol, Polyetherimid, Aramide, wie m-Aramid, p-Aramid oder co-poly-para Aramid, Metall, Glas, Keramik, Gestein, Carbon, modifiziertes Polyester, modifizierte Viskose.

Die genannten Materialien können alleine oder in Kombination, bspw. als Hybridgarn, verwendet werden.

Zur weiteren Optimierung des Brandschutzverhaltens kann der Flock an seiner Oberfläche noch zusätzlich mit wenigstens einer reflektierenden Substanz bedampft, d.h. besputtert, sein. Aufgrund der Wärmereflektion, welche sich durch die Verwendung einer reflektierenden Substanz ergibt, erwärmt sich die darunterliegende zu schützende Mischung weniger schnell. Dadurch ist insbesondere zu Beginn einer erhöhten Wärmebelastung die Temperatur der darunterliegenden und zu schützenden Oberfläche des Artikels niedriger. Hierdurch werden die zusätzlich freigesetzte Wärme und die Entstehung sowohl dichter als auch toxischer Rauchgase zeitlich verzögert.

Handelt es sich bei der reflektierenden Substanz um Metallpartikel, z.B. aus Aluminium oder anderen geeigneten Metallen, so wird die Artikeloberfläche zusätzlich vor Entzündung geschützt.

Wie bereits oben erwähnt, wird der Flock in der Regel mit Hilfe eines Beflockungsklebers auf die zu beflockende Oberfläche aufgebracht, so dass die Artikeloberfläche nicht nur teilweise oder vollständig mit einem Flock, sondern zusätzlich auch noch teilweise oder vollständig mit einem Beflockungskleber versehen ist.

Anstelle des Beflockungsklebers kann alternativ auch eine Zusammensetzung auf Basis wenigstens eines Isocyanats in Anlehnung an DE 10 2009 044 533 A1 verwendet werden.

In einer besonders bevorzugten Ausführungsform enthält der Beflockungskleber und / oder die Zusammensetzung auf Basis wenigstens eines Isocyanats zur weiteren Optimierung des Brandschutzverhaltens und / der der Schwer-Entflammbarkeit wenigstens eine brandhemmende Substanz.

Als brandhemmende Substanz für den Beflockungskleber und / oder für die Zusammensetzung auf Basis wenigstens eines Isocyanats können Flammschutzmittel, aber auch weitere Substanzen wie Mikroglaskugeln und / oder Mikroglashohlkugeln, die bevorzugt haftungsfreundlich präpariert sind, und / oder Kunststoffhohlkugeln mit einer flexiblen Polymerhülle und / oder reflektierende Substanzen, wie bspw. Metallpartikel, insbesondere aus Aluminium und / oder Messing, verwendet werden.

Die Mikroglaskugeln und / oder die Mikroglashohlkugeln schmelzen im Brandfall auf und bilden glasige, isolierend wirkende Schichten. Handelt es sich um Hohlkugeln, bevorzugt um Mikroglashohlkugeln, so können in einer bevorzugten Variante in den Hohlkugeln selbst brandhemmende Substanzen verkapselt sein, die nach dem Schmelzen der äußeren Hülle freigesetzt werden und dann in konzentrierter Form zusätzlich brandhemmend wirken.

Insbesondere die Kunststoffhohlkugeln können in bereits expandierter Form und / oder in expandierbarer Form vorliegen.

In einer bevorzugten Ausführungsform werden expandierbare Kunststoffhohlkugeln verwendet. Bei den expandierbaren Kunststoffhohlkugeln ist ein Gas verkapselt. Bei Wärmezufuhr erhöht sich der Gasdruck im Inneren er Hülle, die gleichzeitig erweicht. Die dadurch bedingte Volumenzunahme, führt zu einer Erhöhung der Schichtdicke, was zu einer weiteren isolierenden Wirkung schon vor dem eigentlichen Brand führt. Diese Volumenzunahme erfolgt bereits bei Temperaturen, die deutlich niedriger sind als die üblichen Starttemperaturen (Onset-temperature) der Blähgraphite.

Als Flammschutzmittel für den Beflockungskleber und / oder für die Zusammensetzung auf Basis wenigstens eines Isocyanats können alle der fachkundigen Person bekannten Flammschutzmittel verwendet werden.

Es kommen hierbei insbesondere Stannate, wie Zinkstannat oder Zinkhydroxystannat, Hydroxide, wie Magnesiumhydroxid oder Aluminiumhydroxid, Cyanurate, wie Melamincyanurat, Borate, wie Zinkborat, phosphorhaltige Komponenten, wie Resorcinoldiphosphat oder aromatische Polyphosphate, stickstoffhaltige Komponenten, wie Ammoniumphosphat, Carbonate, wie Calciumcarbonat oder Magnesiumcarbonat, expandierbarer Graphit oder Intumeszenzgemische in Frage.

Intumeszenzgemische blähen zu Schäumen auf. Sie werden benutzt, um brennbare Materialien wie Kunststoffe oder Holz, aber auch Stahl, der bei erhöhter Temperatur seine Festigkeit einbüßt, gegen die Einwirkung von Wärme und Feuer zu schützen. Gegebenenfalls können auch noch geringe Mengen an Antimontrioxid, trotz der gesundheitsgefährdenden Wirkung, in Kombination mit wenigstens einem der genannten Flammschutzmittel verwendet werden.

Die brandhemmenden Substanzen können jeweils alleine oder in Kombination verwendet werden.

Der Flock wird in einer bevorzugten Ausführungsform vor dem eigentlichen Vulkanisationsprozess auf die Oberfläche des noch nicht vulkanisierten Artikelrohlings aufgebracht. Vorteilhaft ist hierbei, dass in der ersten Phase des Vulkanisationsprozesses, der so genannten Fließphase (=Ausformphase), sowohl Anteile vom Faserflock als auch Anteile von den Bestandteilen des Beflockungsklebers und / oder der Zusammensetzung auf Basis des Isocyanats in den darunterliegenden zu schützenden Grundkörper aus einem polymeren Werkstoff eindringen, d.h. fließen, können. Hierdurch wird die Haftung des Flocks an den Grundkörper nochmals verbessert, insbesondere weil hierdurch eine Verankerung der Fasern des Flocks direkt an den Grundkörper zumindest teilweise ermöglicht wird. Insbesondere bei Verwendung einer Zusammensetzung auf Basis des Isocyanats, z.B. gemäß DE 10 2009 044 533 A1, schreitet die Vernetzungsreaktion dieser Zusammensetzung unter den in der Gummiindustrie üblichen Vulkanisationstemperaturen weiter fort, was sich vorteilhafterweise in einer besseren Anhaftung des Flocks und besonders in einer verbesserten Abriebfestigkeit des Flockgefüges äußert.

Gegebenenfalls ist es auch möglich, den Flock mit Hilfe des Beflockungsklebers und / oder der Zusammensetzung auf Basis des Isocyanats auf einen bereits fertig vulkanisierten Artikel aufzubringen. Dies hat den Vorteil, dass bereits fertige Artikel nachträglich brandhemmend ausgerüstet werden können. Um hierbei die Haftung noch weiter zu verbessern, ist es vorteilhaft, die bereits vulkanisierte Gummioberfläche zu reinigen und ggf. zu aktivieren.

Der Flock kommt insbesondere für folgende Artikel zur Anwendung:
- Dämpfungselement eines Lagers, einer Buchse oder einer Schichtfeder, Konusfeder
   Das Dämpfungselement umfasst einen polymeren Werkstoff mit elastischen Eigenschaften und kommt zumeist im Rahmen eines Metall-Polymer-Verbundes zum Einsatz, und zwar in Form eines Lagers mit einem Lageroberteil und Lagerunterteil, einer Buchse mit Kern und Hülse oder einem Metall-Gummi-Federelement, wie z.B. einer Schicht-, oder Konusfeder. Vorzugsweise werden hier alle freien Oberflächen des Dämpfungselementes mit dem Flock versehen.
   Von besonderer Bedeutung ist ein Luftfederbalg, der in Verbindung mit der Figurenbeschreibung noch näher vorgestellt wird und der nicht Teil der beanspruchten Erfindung ist.
   Bei der Bildung des Grundkörpers kommen insbesondere (teil)vulkanisierbare Polymermischungen zum Einsatz, wobei folgende beiden Werkstoffvarianten wegen ihrer elastischen Eigenschaften zu nennen sind:
- Variante A (Elastomere)
   Die Polymermischung ist eine vulkanisierbare thermoplastfreie Kautschukmischung, enthaltend wenigstens eine Kautschukkomponente sowie weitere Mischungsingredienzien. Als Kautschukkomponenten sind insbesondere zu nennen: Ethylen-Propylen-Kautschuk (EPM), Ethylen-Propylen-Dien-Kautschuk (EPDM), Nitrilkautschuk (NBR), (teil)hydrierter Nitrilkautschuk (HNBR), Fluor-Kautschuk (FKM), Chloropren-Kautschuk (CR), Naturkautschuk (NR), Styrol-Butadien-Kautschuk (SBR), Isopren-Kautschuk (IR), Butylkautschuk (IIR), Brombutylkautschuk (BIIR), Chlorbutylkautschuk (CIIR), Bromiertes Copolymer aus Isobutylen und Paramethylstyrol (BIMS), Butadien-Kautschuk (BR), Chloriertes Polyethylen (CM), Chlorsulfoniertes Polyethylen (CSM), Alkyliertes Chlorsulfoniertes Polyethylen (ACSM), Polyepichlorhydrin (ECO), Terpolymere des ECO mit Ethylenoxid und ungesättigten Monomeren (ETER), Ethylen-Vinylacetat-Kautschuk (EVA), Acrylat-Kautschuk (ACM), Ethylen-Acrylat-Kautschuk (AEM), Silikonkautschuk (MQ, VMQ, PVMQ, FVMQ), Fluorierter Methylsilikonkautschuk (MFQ), Perfluorinierter Propylen-Kautschuk (FFPM), Perfluorcarbon-Kautschuk (FFKM), Polyurethan (PU). Die vorgenannten Kautschuktypen können unverschnitten sein. Auch der Einsatz eines Verschnittes, insbesondere in Verbindung mit einem der vorgenannten Kautschuktypen, beispielsweise ein NR/BR-Verschnitt oder ein BR/SBR-Verschnitt, ist möglich.
   Welcher Kautschuktyp bevorzugt wird, hängt von der Artikelart ab. Besonders Vielfältig ist der Einsatz von verschiedenen Kautschuktypen bei schlauchförmigen Körpern, wobei hier insbesondere folgende Kautschukkomponenten zu nennen sind: NR, IR, ACM, AEM, BIMS, CM, CSM, CR, IIR, BIIR, CIIR, ECO, EPM, EPDM, ETER, EVA, FKM, HNBR, VMQ oder FVMQ. Bei Antriebsriemen kommen insbesondere Kautschukmischungen auf der Basis von EPM und/oder EPDM, ACSM (bei Keil- und Keilrippenriemen) sowie NBR, speziell jedoch HNBR, aber auch XNBR bzw. NXBR (bei Zahnriemen) zur Anwendung.
   Die üblichen Mischungsingredienzien umfassen wenigstens einen Vernetzer oder ein Vernetzersystem (Vernetzungsmittel und Beschleuniger). Zusätzliche Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Farbpigmente, Verstärkungsfasern). Diesbezüglich wird auf den allgemeinen Stand der Kautschukmischungstechnologie verwiesen.
- Variante B (Thermoplastische Elastomere)
   Die Polymermischung ist eine teilvulkanisierbare Polymermischung, enthaltend wenigstens eine Thermoplastkomponente, wenigstens eine Kautschukkomponente, die zumindest teilvernetzbar ist sowie weitere Mischungsingredienzien. Die bevorzugten Thermoplastkomponenten sind: Polyolefin, insbesondere Polyethylen (PE) oder Polypropylen (PP), Polystyrol (PS), Polyamid (PA), beispielsweise PA6 oder PA6.6, Polyester, beispielsweise PET, PEN oder PBT.
   Als Kautschukkomponenten sind hier insbesondere EPM, EPDM, SBR, CR, NR, NBR, FKM, ACM oder AEM zu nennen, die insbesondere mit keiner weiteren Kautschukkomponente verschnitten sind.
   Hinsichtlich der üblichen Mischungsingredienzien wird auf die Mischungstechnologie zu der Variante A, insbesondere auf die Lehre gemäß der Offenlegungsschrift DE 100 04 632 A1 verwiesen.

Es werden nun, unter Bezugnahme auf schematische Zeichnungen, einige Vorrichtungen erläutert.

Es zeigen:
Fig. 1 eine Luftfeder-Anordnung;
Fig. 2 den Schichtenaufbau eines Luftfederbalges mit einem Flock.
Fig. 3 einen Schnitt durch einen erfindungsgemäßen Schwingungsdämpfer

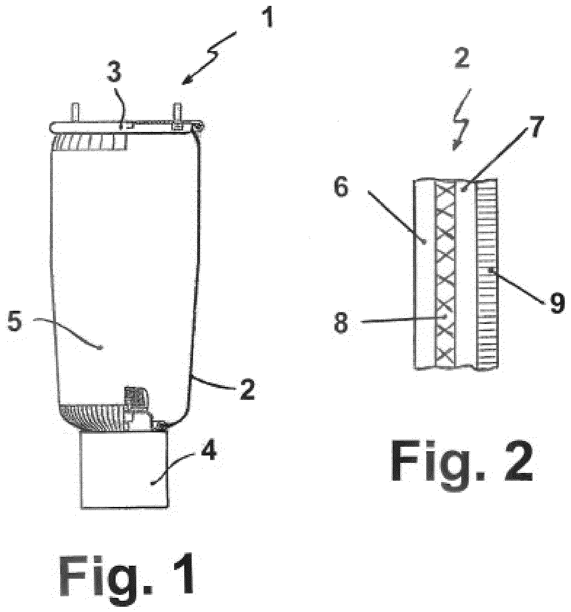

Fig. 1 zeigt eine Luftfeder-Anordnung 1, umfassend einen Luftfederbalg 2 sowie die beiden Anschlussbauteile Deckel 3 und Abrollkolben 4, und zwar unter Ausbildung einer volumenelastischen Luftkammer 5.

Fig. 2 zeigt nun den Schichtenaufbau eines fertig gestellten Luftfederbalges 2. Der Luftfederbalg besteht dabei aus einer Innenschicht 6 und Außenschicht 7 als elastischer Grundkörper, beispielsweise aus einer vulkanisierten Kautschukmischung auf der Basis von NR, einer zwischen der Innenschicht 6 und Außenschicht 7 eingebetteten Festigkeitsträgerschicht 8, beispielsweise in Form eines Polyamid-Gewebes, sowie aus einem Überzug 9, der mit der Außenschicht 8 in direkter Verbindung steht. Der Flock 9 wurde mit einem Beflockungskleber aufgebracht, welcher brandhemmende Substanzen enthält.

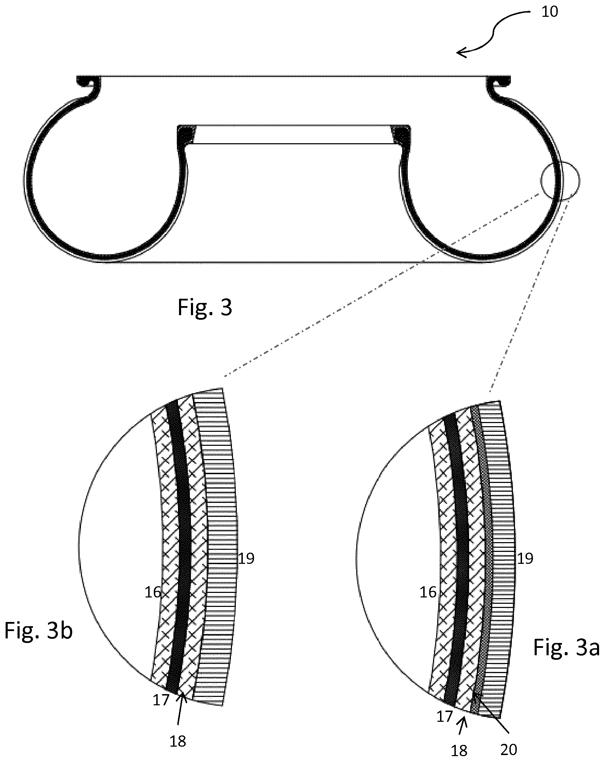

Fig.3 zeigt einen Schnitt durch einen Schwingungsdämpfer 10. Der Ausschnitt in dem Kreis von Fig. 3 wird in den Figuren 3a und 3b näher dargestellt. Zwischen der Innenschicht 16 und der Außenschicht 17 befindet sich eine eingebettete Festigkeitsträgerschicht 18, beispielsweise in Form eines Polyamid-Gewebes. Der Flock 19 wurde in Fig 3a mit einem Beflockungskleber 20 und in Fig 3b ohne einen Beflockungskleber aufgebracht.

### Bezugszeichenliste

### (Teil der Beschreibung)

1 Luftfeder-Anordnung
2 Luftfederbalg
3 Deckel
4 Abrollkolben
5 volumenelastische Luftkammer
6 Innenschicht eines Luftfederbalges
7 Außenschicht eines Luftfederbalges
8 Festigkeitsträgerschicht eines Luftfederbalges
9 Flock
10 Dämpfungselement
16 Innenschicht eines Dämpfungselements
17 Außenschicht eines Dämpfungselements
18 Festigkeitsträgerschicht eines Dämpfungselements
19 Flock
20 Beflockungskleber

## Patentansprüche

1. Artikel (1, 10) mit einem Grundkörper aus einem polymeren Werkstoff mit elastischen Eigenschaften, **dadurch gekennzeichnet, dass** die Artikeloberfläche vollständig oder teilweise mit wenigstens einem Flock (9,19) versehen ist, wobei der Artikel das Dämpfungselement eines Lagers, einer Buchse oder einer Schichtfeder, Konusfeder ist und wobei für den Flock (9,19) Fasern bzw. Textilfasern verwendet werden, die von sich aus schon einen ausreichenden Brandschutz bieten oder von sich aus ausreichende Flammwidrigkeit aufweisen..

2. Verfahren zur Herstellung eines Artikels (1, 10) aus einem polymeren Werkstoff mit elastischen Eigenschaften gemäß Anspruch 1, **dadurch gekennzeichnet, dass** der Flock (9, 19) in wenigstens einem Verfahrensschritt mit Hilfe wenigstens eines Beflockungsklebers (20) und / oder mit Hilfe wenigstens einer Zusammensetzung auf Basis wenigstens eines Isocyanats auf die Oberfläche des Artikels aufgebracht wird.

3. Verfahren nach Anspruch 3, **dadurch gekennzeichnet, dass** der Beflockungskleber (20) und / oder die Zusammensetzung auf Basis wenigstens eines Isocyanats wenigstens eine brandhemmende Substanz enthält.

## Claims

1. Article (1, 10) having a main body composed of a polymeric material having elastic properties, **characterized in that** all or part of the article surface has been provided with at least one flock (9, 19), where the article is the damping element of a bearing, of a bushing or of a multilayered spring, cone spring, and where fibres or textile fibres used for the flock (9, 19) intrinsically offer adequate fire protection or intrinsically have adequate flame retardancy.

2. Process for producing an article (1, 10) from a polymeric material having elastic properties according to Claim 1, **characterized in that** the flock (9, 19) is applied to the surface of the article in at least one process step with the aid of at least one flocking adhesive (20) and/or with the aid of at least one composition based on at least one isocyanate.

3. Process according to Claim 3, **characterized in that** the flocking adhesive (20) and/or the composition based on at least one isocyanate comprises at least one fire-retardant substance.

## Revendications

1. Article (1, 10) présentant un corps de base en un matériau polymère pourvu de propriétés élastiques, **caractérisé en ce que** la surface d'article est pourvue complètement ou partiellement d'au moins un floc (9, 19), l'article étant l'élément amortisseur d'un palier, d'une douille ou d'un ressort multicouche, d'un ressort conique ; et des fibres ou, selon le cas, des fibres textiles, qui offrent en soi déjà une protection incendie suffisante ou qui présentent en soi déjà une résistance aux flammes suffisante, étant utilisées pour le floc (9, 19).

2. Procédé de fabrication d'un article (1, 10) en un matériau polymère pourvu de propriétés élastiques selon la revendication 1, **caractérisé en ce que** le floc (9, 19) est appliqué sur la surface de l'article en au moins une étape de procédé à l'aide d'au moins une colle de flocage (20) et/ou à l'aide d'au moins une composition à base d'au moins un isocyanate.

3. Procédé selon la revendication 3, **caractérisé en ce que** la colle de flocage (20) et/ou la composition à base d'au moins un isocyanate contien(nen)t au moins une substance ignifuge.
